# FASCICULE DE BREVET EUROPEEN

(11) **EP 2 537 114 B1**
(45) Date de publication et mention de la délivrance du brevet: **03.10.2018**
(21) Numéro de dépôt: 11708064.8
(22) Date de dépôt: 04.02.2011
(51) Int. Cl.: G06F 21/31

(54) **PROCEDE DE VERROUILLAGE/DEVERROUILLAGE A DISTANCE D'UNE MACHINE**
PROZESS ZUR SPERRUNG UND ENTSPRERRUNG EINER MASCHINE AUS DER DISTANZ
METHOD FOR REMOTELY LOCKING AND UNLOCKING A MACHINE

(30) Priorité: 17.02.2010 FR 1051146
(43) Date de publication de la demande: 26.12.2012
(73) Titulaire: Evidian, 78340 Les Clayes Sous Bois (FR)
(72) Inventeur: DEDIEU, Gérard, F-78180 Montigny le Bretonneux (FR); COSSARD, David, F-95490 Vauréal (FR)
(74) Mandataire: Camus, Olivier Jean-Claude
(86) Numéro de dépôt international: PCT/FR2011/050231
(87) Numéro de publication internationale: WO 2011/101574

(56) Documents cités:
- US-A1- 2005 193 118
- "Ubuntu Manuals", INTERNET CITATION, 1 juin 2006 (2006-06-01), XP007913447, Extrait de l'Internet: URL:http://manpages.ubuntu.com/manpages/da pper/man1/xscreensaver-command.1.html [extrait le 2010-06-14]
- "Sudoers Manual", INTERNET CITATION, 15 octobre 2004 (2004-10-15), XP007913462, Extrait de l'Internet: URL:http://web.archive.org/web/20041015183 133/http://www.gratisoft.us/sud o/man/sudoers.html [extrait le 2010-06-15]
- Ubuntu QA Team: "HOWTO: Replace gnome-screensaver with xscreensaver", Ubuntu project , 13 juin 2006 (2006-06-13), XP002587361, Extrait de l'Internet: URL:http://ubuntuforums.org/showthread.php ?t=195557 [extrait le 2010-06-16]
- Ubuntu QA Team: "Kill screensaver from terminal", Ubuntu Project , 8 mars 2007 (2007-03-08), XP002587362, Extrait de l'Internet: URL:http://ubuntuforums.org/showthread.php ?t=379103 [extrait le 2010-06-16]
- Jamie Zawinski: "Manpage of xscreensaver", X 11 project , 20 mars 2005 (2005-03-20), XP002587293, Extrait de l'Internet: URL:http://gd.tuwien.ac.at/linuxcommand.or g/man_pages/xscreensaver1.html [extrait le 2010-06-16]

## Description

### DOMAINE TECHNIQUE DE L'INVENTION

La présente invention concerne un procédé de changement d'état, verrouillé ou déverrouillé, d'une machine cible. L'invention concerne également une machine cible apte à mettre en oeuvre du procédé de changement d'état.

Elle trouve une application particulière, mais non limitative, dans le domaine bancaire.

### ARRIÈRE-PLAN TECHNOLOGIQUE DE L'INVENTION

Un procédé de changement d'état, verrouillé ou déverrouillé, d'une machine cible, connu de l'homme du métier, permet de verrouiller ladite machine, soit par action de l'utilisateur de la machine, soit automatiquement lorsqu'aucune action via le clavier ou la souris n'est effectuée sur ladite machine au bout d'un temps déterminé.
Ainsi, dans le domaine bancaire, lorsqu'un opérateur boursier couramment appelé « trader » en anglais, s'absente de son poste de travail, soit il verrouille lui-même sa machine cible, soit la machine cible sur laquelle il opère se verrouille automatiquement au bout d'un temps déterminé, notamment, lorsque l'opérateur boursier s'absente de son poste. Le verrouillage évite ainsi à toute autre personne d'utiliser de manière illicite cette machine cible en l'absence de son utilisateur.
L'opérateur boursier lance des opérations boursières au moyen de la machine cible. Ces opérations boursières sont des scripts qui peuvent parfois durer plusieurs heures.
Ces opérations boursières dépendent de données très sensibles qui évoluent rapidement au cours du temps telles qu'une valeur en bourse, des données économiques ou politiques. C'est pourquoi il est nécessaire de ne pas perdre de vue l'évolution au cours de la journée des opérations boursières qui ont été lancées. Lorsque l'opérateur boursier s'absente de son poste, les données sur l'écran de la machine cible restent visibles ainsi que le déroulement des opérations boursières qui ont été lancées.
Un inconvénient de cet état de la technique est que lorsqu'un opérateur boursier s'absente de son poste, selon la fluctuation des données sensibles mentionnées ci-dessus, il est parfois nécessaire d'arrêter ou de modifier rapidement les opérations boursières qui ont été lancées. Comme la machine cible a été verrouillée pour éviter à toute autre personne d'utiliser frauduleusement cette machine cible, aucune intervention n'est possible sur la machine cible par un utilisateur d'une autre machine pour effectuer ces actions sur les opérations boursières. Dans l'état de la technique il est connu le système xscreensaver, voir http://manpages.ubuntu.com/manpages/dapper/man1/xscreensaver-command.1.html qui divulgue le verrouillage et le déverrouillage d'une machine à distance.

### DESCRIPTION GENERALE DE L'INVENTION

La présente invention a pour but un procédé de changement d'état, verrouillé ou déverrouillé, d'une machine cible, qui permette de résoudre les problèmes qui peuvent survenir sur ladite machine cible en l'absence de son utilisateur et lorsque ladite machine a été notamment précédemment verrouillée.

Ce but est atteint par un procédé de changement d'état, verrouillé ou déverrouillé, d'une machine cible comportant un service de sécurité et un module de gestion de session, le procédé comportant les étapes de :
- recevoir par ledit service de sécurité une requête correspond à une demande de changement d'état de la machine cible, ladite requête comprenant au moins une information d'identification d'un utilisateur d'une machine source ;
- à partir dudit service de sécurité, vérifier si des droits d'accès à ladite machine cible associés audit utilisateur de la machine source autorisent un changement d'état de la machine cible par ledit utilisateur ;
- dans l'affirmative, à partir dudit service de sécurité, envoyer un message de changement d'état au module de gestion de session de ladite machine cible et procéder audit changement d'état par ledit module de gestion de session.

Comme on va le voir en détail par la suite, grâce à l'autorisation de changement d'état de la machine cible qui est donnée à un utilisateur d'une machine source (différente de la machine cible) via des droits d'accès associés, ce dernier va pouvoir déverrouiller à distance la machine cible (donc la machine d'une autre personne) qui est verrouillée, c'est-à-dire qu'il va pouvoir déverrouiller une session utilisateur qu'il n'a pas lui-même ouverte. Inversement, il va pouvoir verrouiller la machine cible à distance si celle-ci est dans un état déverrouillé.

Selon des modes de réalisation non limitatifs, le procédé peut comporter en outre une ou plusieurs caractéristiques supplémentaires parmi les suivantes :
- Le procédé comporte une étape supplémentaire d'enregistrement, dans une base de gestion de requêtes, d'informations de traçabilité correspondant à ladite requête.
   Cela permet de faire un audit sur lesdites requêtes et notamment de vérifier quel est la véritable personne qui est à l'origine d'une action sur la machine cible.
- Les droits d'accès dépendent de paramètres de délégation d'un groupe d'utilisateurs à un autre groupe d'utilisateurs.
   Cela permet de gérer des autorisations de délégation de droits d'accès par un administrateur d'un parc de machines comprenant la machine cible et la machine source.
- Les paramètres de délégation sont activables par un utilisateur d'un groupe d'utilisateurs.
   Cela permet de déclencher une délégation de droits d'accès au niveau utilisateur. Ce dernier est alors maître des autorisations qu'il donne à des utilisateurs d'autres machines pour accéder à sa machine dans la limite des délégations autorisées par l'administrateur du parc de machines.
- Des paramètres d'exécution sont associés aux droits d'accès.
   Les droits d'accès sont ainsi paramétrables.
- La requête de changement d'état est une requête TCP/IP ou UDP.
   Cela permet une communication entre deux machines d'un même réseau informatique.
- Un message de changement d'état est un message applicatif défini en fonction du module de gestion de session de la machine cible.
   Cela permet d'utiliser des messages standards existants.
- Le message de changement d'état est envoyé à un greffon du module de gestion de session.
   Cela évite de modifier l'interface utilisateur de gestion de session qui est comprise dans le module de gestion de session de la machine cible.

L'invention concerne également une machine cible comportant un service de sécurité et un module de gestion de session, ladite machine cible étant apte à :
- recevoir par ledit service de sécurité une requête correspondant à une demande de changement d'état, ladite requête comprenant au moins une information d'identification d'un utilisateur d'une machine source ;
- à partir dudit service de sécurité, vérifier si des droits d'accès associés audit utilisateur de la machine source autorisent un changement de son état par ledit utilisateur ;
- dans l'affirmative, à partir dudit service de sécurité, envoyer un message de changement d'état au module de gestion de session et procéder audit changement d'état par ledit module de gestion de session.

Selon un mode de réalisation non limitatif, le module de gestion de session comprend :
- un greffon apte à recevoir un message de changement d'état dudit service de sécurité ; et
- une interface utilisateur de gestion de session apte à être sollicitée par ledit greffon pour changer d'état ladite machine cible.

L'invention concerne également une machine source apte à coopérer avec une machine cible selon l'une des caractéristiques précédentes, ladite machine cible comportant un service de sécurité, ladite machine source étant apte à :
- recevoir une demande de changement d'état de la machine cible d'un utilisateur de la machine source ; et
- envoyer une requête correspondant à ladite demande au service de sécurité de ladite machine cible, ladite requête comprenant au moins une information d'identification d'un utilisateur de ladite machine source.

L'invention concerne également un système informatique apte à effectuer un changement d'état, verrouillé ou déverrouillé, d'une machine cible, ledit système informatique comprenant une machine cible selon l'une quelconque des caractéristiques précédentes, et une machine source selon la caractéristique précédente apte à coopérer avec ladite machine cible.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention.
- La Fig.1 illustre notamment un premier organigramme simplifié d'un mode de réalisation non limitatif du procédé de changement d'état selon l'invention ;
- La Fig.2 illustre notamment un deuxième organigramme simplifié du procédé de changement d'état de la Fig. 1, ledit procédé comprenant en outre une étape supplémentaire d'enregistrement d'informations de traçabilité d'une requête ;
- La Fig.3 est une première représentation schématique d'un système informatique comprenant une machine cible et une machine source, selon un premier mode de réalisation non limitatif, ladite machine cible étant apte à mettre en oeuvre le procédé de changement d'état de la Fig. 1 et 2 ;
- La Fig.4 illustre schématiquement des échanges de requêtes et de messages entre une machine cible et une machine source selon un mode de réalisation non limitatif du procédé de la Fig. 2 ;
- La Fig.5 est une deuxième représentation schématique d'un système informatique comprenant une machine cible et une machine source, ladite machine cible étant apte à mettre en oeuvre le procédé de changement d'état de la Fig. 1 et 2 ; et
- La Fig.6 est une troisième représentation schématique d'un système informatique comprenant une machine cible et une machine source, selon un deuxième mode de réalisation non limitatif, ladite machine cible étant apte à mettre en oeuvre le procédé de changement d'état de la Fig. 1 et 2.

### DESCRIPTION DE MODES DE REALISATION DE L'INVENTION

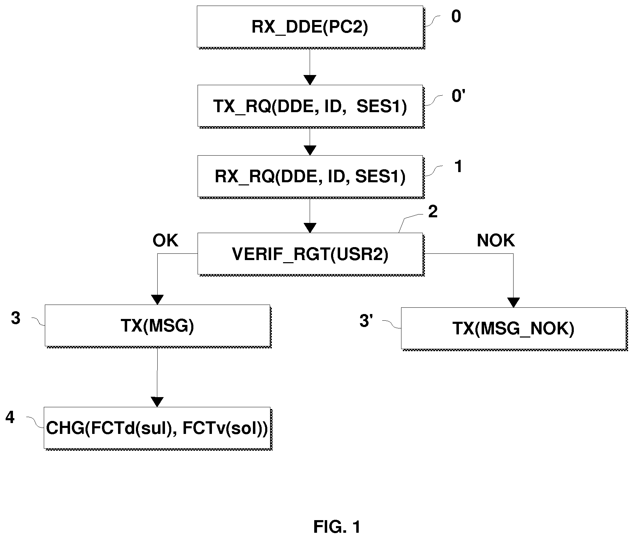

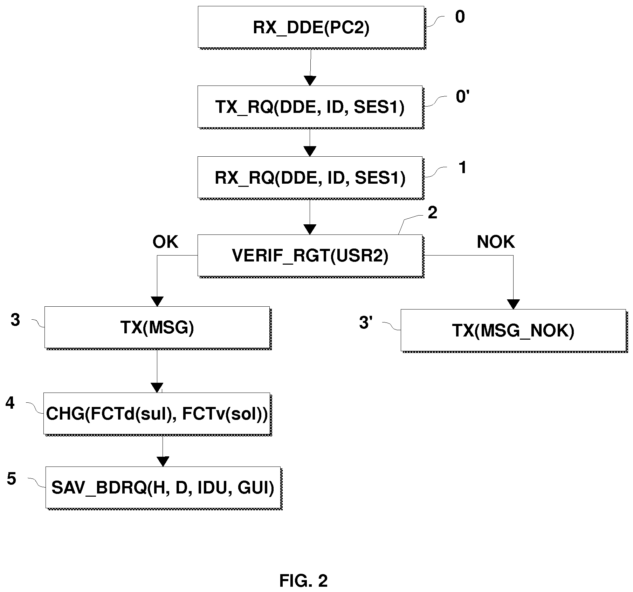

Le procédé de changement d'état, verrouillé ou déverrouillé, d'une machine cible comportant un service de sécurité et un module de gestion de session, est décrit dans un mode de réalisation non limitatif à la Fig. 1 et à la Fig. 2.

On entend par changement d'état, verrouillé slo ou déverrouillé sul, d'une machine, le fait de déverrouiller une session utilisateur qui est verrouillée ou de verrouiller une session utilisateur qui est déverrouillée.

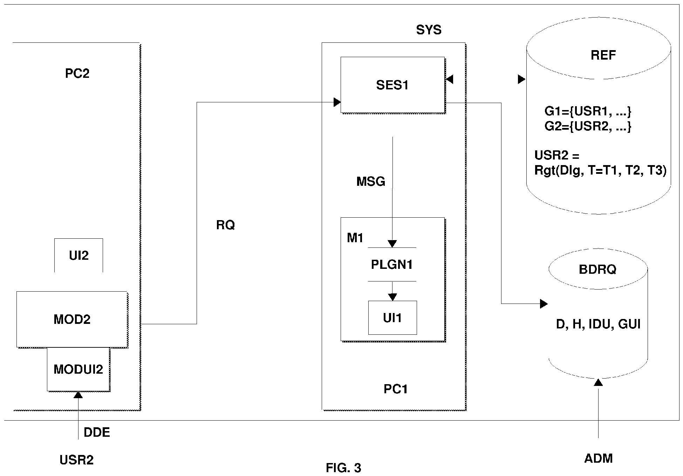

Le procédé de changement d'état est mis en oeuvre par la machine cible dans un système informatique SYS comprenant ladite machine cible PC1 et une machine source PC2 tel qu'illustré à la Fig. 3.
Par machine, on entend tout matériel informatique comprenant une interface utilisateur par laquelle un utilisateur peut s'authentifier avec son identifiant et son mot de passe. Dans des exemples non limitatifs, une machine peut être un poste de travail individuel ou un serveur.

Lorsqu'un premier utilisateur USR1 de la machine cible PC1 accède à ladite machine, il se connecte sous une session utilisateur qui lui est propre via un identifiant qui lui est propre et un mot de passe associé. La connexion (appelée également ouverture d'une session) se fait via une interface utilisateur de gestion de session UI1 qui est un composant de l'interface utilisateur (non représentée) de la machine. L'identifiant et le mot de passe forment ce qu'on appelle couramment un « login ». Une session utilisateur peut être verrouillée manuellement par le premier utilisateur ou automatiquement après un temps déterminé, de sorte que personne ne puisse accéder à la machine cible PC1.
Dans la suite de la description, on utilisera indifféremment le terme session utilisateur ou le terme session.

Lorsqu'un deuxième utilisateur USR2 de la machine source PC2 veut effectuer à distance un changement d'état, verrouillé ou déverrouillé, de la machine cible PC1 (pour y accéder), il initie une demande DDE de changement d'état de la machine cible PC1 depuis la machine source PC2. II le fait au moyen d'une interface utilisateur MODUI2 associée à un module de verrouillage/déverrouillage MOD2 de la machine source PC2, tel qu'illustré à la Fig. 3.
Dans un exemple non limitatif, l'interface utilisateur MODUI2 est composée d'une icône dans une barre de tâches sur l'écran de la machine PC2 et propose:
- une liste d'utilisateurs (dont le premier utilisateur USR1) qui ont activé les droits d'accès à leur machine(s) associés au deuxième utilisateur URS2,
- puis, après que le deuxième utilisateur USR2 a choisi le premier utilisateur URS1, une liste de machine(s) du deuxième utilisateur USR2 sur lesquelles le deuxième utilisateur USR2 a effectivement les droits d'accès.

Ainsi, la machine source PC2 reçoit la demande DDE de changement d'état de la machine cible PC1 de l'utilisateur USR2 de la machine source PC2, tel qu'illustré sur la Fig. 2 (étape RX_DDE(PC2) référencée étape préalable 0) sur les figures 1, 2 et 4).
Dans un mode de réalisation non limitatif, sur sollicitation de l'interface utilisateur MODUI2, la demande DDE de changement d'état de la machine cible PC1 est envoyée au module de verrouillage/déverrouillage MOD2 de la machine source PC2.

Ensuite, ladite machine source PC2 envoie audit service de sécurité SES1 de ladite machine cible PC1 une requête RQ correspondant à ladite demande DDE, ladite requête RQ comprenant au moins une information d'identification ID de l'utilisateur USR2 de la machine source PC2 (étape TX_RQ(DDE, ID, SES1) référencée étape préalable 0') sur les figures 1, 2 et 4).
Dans un mode de réalisation non limitatif, le module de verrouillage/déverrouillage MOD2 de la machine source PC2 envoie ladite requête RQ.
Dans des modes de réalisation non limitatifs, la requête RQ de changement d'état est une requête TCP/IP (« Transmission Control Protocol/Internet Protocol » en anglais) ou UDP («User Datagram Protocol » en anglais). Dans ce dernier cas, les requêtes sont appelées des datagrammes. Le protocole de communication UDP est un protocole simple qui permet d'envoyer des requêtes à une autre machine sans demande de communication préalable. Bien entendu, d'autres protocoles de communication permettant un envoi de requête entre deux machines peuvent être utilisés.

A ce moment, le procédé de changement d'état est mise en oeuvre. Ledit procédé comporte les étapes suivantes telles qu'illustrées à la Fig. 1 et à la Fig. 2. :
- recevoir par ledit service de sécurité SES1 une requête RQ correspondant à une demande DDE de changement d'état de la machine cible PC1, ladite requête RQ comprenant au moins une information d'identification ID d'un utilisateur USR2 d'une machine source PC2 (étape RX_RQ(DDE, ID, SES1));
- à partir dudit service de sécurité SES1, vérifier si des droits d'accès Rgt à ladite machine cible PC1 associés audit utilisateur USR2 de la machine source PC2 autorisent un changement d'état de la machine cible PC1 par ledit utilisateur USR2 (étape VERIF_RGT(USR2)) ;
- dans l'affirmative, à partir dudit service de sécurité SES1, envoyer un message de changement d'état MSG au module de gestion de session M1 de ladite machine cible PC1 (étape TX(MSG)) et procéder audit changement d'état slo/sul par ledit module de gestion de session M1 (étape CHG(FCTd(sul), FCTv(sol))).

Dans un mode de réalisation non limitatif, dans la négative, le procédé de changement d'état comporte une étape supplémentaire d'envoyer à partir dudit service de sécurité SES1 un message d'erreur MSG_NOK pour prévenir le deuxième utilisateur USR2 qu'il n'a pas les droits pour verrouiller/déverrouiller la machine cible PC1 (étape TX(MSG_NOK)).

Selon un mode de réalisation non limitatif, le procédé comporte en outre une étape supplémentaire d'enregistrement, dans une base de gestion de requêtes BDRQ, d'informations de traçabilité H, D, IDU, GUI correspondant à ladite requête RQ (étape SAV_BDRQ(H, D, IDU, GUI) illustré à la Fig. 2).

Pour la suite de la description, dans le mode de réalisation non limitatif du procédé décrit, le procédé comprend ces étapes supplémentaires.

Les étapes du procédé de changement d'état sont décrites en détail ci-après en se référant aux figures 2, 3 et 4.
Dans l'exemple qui suit, la machine cible PC1 se trouve dans un état verrouillé slo.
On rappelle que lorsqu'une machine est verrouillée, la session utilisateur est verrouillée. Cela signifie qu'aucune action utilisateur n'est possible, mis à part via le clavier de la machine cible PC1 par lequel la seule action possible est la réactivation de la session utilisateur en entrant l'identifiant utilisateur et le mot de passe associé du premier utilisateur USR1.
On notera que la machine source PC2 comporte un module de verrouillage/déverrouillage MOD2, une interface utilisateur MODUI2 associée et une interface utilisateur de gestion de session UI2, et la machine cible PC1 comporte une interface utilisateur de gestion de session UI1, cette dernière étant située dans un module de gestion de session M1, tel qu'illustré à la Fig. 3.

**Dans une première étape 1),** ledit service de sécurité SES1 reçoit une requête RQ correspond à une demande DDE de changement d'état de la machine cible PC1, ladite requête RQ comprenant au moins une information d'identification ID d'un utilisateur USR2 d'une machine source PC2.
Cette information d'identification ID permet d'identifier l'auteur de la requête RQ, soit ici le deuxième utilisateur USR2, et par conséquent les droits d'accès associés audit utilisateur USR2 utilisés dans l'étape suivante. Dans un exemple non limitatif, cette information d'identification ID est un identifiant unique associé à l'utilisateur (couramment appelé en anglais « Global Unique Identifier »).

**Dans une deuxième étape 2),** le service de sécurité SES1 vérifie si des droits d'accès Rgt à ladite machine cible PC1 associés audit utilisateur USR2 de la machine source PC2 autorisent un changement d'état de la machine cible PC1 par ledit utilisateur USR2.
Dans un mode de réalisation non limitatif, les droits d'accès Rgt dépendent de paramètres de délégation Dlg d'un groupe d'utilisateurs G1 à un autre groupe d'utilisateurs G2.
On notera que ces paramètres sont définis par un administrateur ADM gérant un parc de machines dans lequel se trouvent la machine cible PC1 et la machine source PC2.
Ainsi, dans un exemple non limitatif, un paramètre de délégation Dlg peut stipuler qu'un premier groupe G1 d'utilisateurs, appelé groupe délégant, (ledit groupe comprenant le premier utilisateur USR1) a le droit d'autoriser un deuxième groupe G2 d'utilisateurs, appelé groupe délégataire, (ledit groupe comprenant le deuxième utilisateur USR2) d'accéder aux machines PC qu'ils utilisent. On appelle ce droit d'autorisation une délégation. Ces paramètres de délégation Dlg permettent ainsi de positionner les délégations à un niveau administrateur.
On notera que bien entendu, un groupe G peut ne contenir qu'un seul utilisateur.

Dans un mode de réalisation non limitatif, les paramètres de délégation Dlg sont activables par un utilisateur USR d'un groupe d'utilisateurs G1.
Ainsi, les délégations peuvent être activées par chaque utilisateur USR du premier groupe G1. Ainsi, les droits d'accès associés aux utilisateurs délégataires, ici le droit d'accès à la machine cible PC1 par le deuxième utilisateur USR2, ont été activés par le premier utilisateur USR1, le délégant. L'activation des paramètres de délégation se fait donc au niveau utilisateur.

Dans un mode de réalisation non limitatif, des paramètres d'exécution T sont associés aux droits d'accès Rgt.
Ces paramètres d'exécution permettent de spécialiser les droits d'accès Rgt à un niveau utilisateur. Dans des exemples non limitatifs :
- un premier paramètre d'exécution T1 peut être un temps de durée d'activation de la délégation. Ainsi, dans un exemple non limitatif, le premier utilisateur USR1 peut autoriser le deuxième utilisateur USR2 d'accéder à la machine cible PC1 uniquement pendant un temps déterminé. L'activation est ainsi temporaire. Dans un autre exemple, l'activation peut être permanente.
- un deuxième paramètre d'exécution T2 peut déterminer les actions autorisées par les droits d'accès Rgt. Ainsi, par exemple, le deuxième utilisateur USR2 peut avoir des droits d'accès à la machine cible PC1 mais uniquement pour déverrouiller/verrouiller ladite machine cible et arrêter ou modifier une opération boursière, mais il n'aura pas les droits pour lancer une autre opération boursière.
- un troisième paramètre d'exécution T3 peut déterminer le nombre de fois qu'un utilisateur a le droit d'accéder à une machine cible. Cela évite les accès intempestifs de la part d'un utilisateur qui a des droits d'accès sur une machine.

On notera que ces paramètres de délégation Dlg, leur activation et les paramètres d'exécution T sont sauvegardés dans un référentiel REF de droits d'accès du système informatique SYS, tel qu'illustré sur la Fig. 3. Dans un exemple non limitatif, le référentiel est un annuaire LDAP.

Le service de sécurité SES1 a accès à ce référentiel REF et vérifie ainsi les droits d'accès Rgt en vérifiant d'une part le positionnement des paramètres de délégation Dlg (effectué par l'administrateur ADM) et d'autre part leur activation.
Bien entendu, les paramètres d'exécution T sont vérifiés en même temps.
Cette double vérification (paramètres de délégation et activation) permet au service de sécurité SES1 d'être autonome. Il n'a pas besoin d'une autre machine de contrôle pour que le message de changement d'état MSG qui s'ensuit soit envoyé.

On notera que le service de sécurité SES1 est une tâche de fond qui fonctionne de façon indépendante d'une session utilisateur, c'est-à-dire même en l'absence d'une session utilisateur.
Ainsi, le fait que le service de sécurité SES1 soit autonome du module utilisateur de gestion de session M1 (qui gère les sessions utilisateurs) permet d'éviter que ledit service de sécurité SES1 ne s'arrête de fonctionner lorsque ledit module utilisateur de gestion de session M1 n'est plus actif comme c'est le cas avec certains systèmes d'exploitation (non représenté sur les figures) tel que par exemple Windows Vista™ sur lesquels s'appuie ledit module M1.

Par ailleurs, on notera que de manière générale, les droits d'un utilisateur sur une machine sont limités à certain environnement et donc à certaines actions.
Comme le service de sécurité SES1 est indépendant de la session utilisateur, l'interface utilisateur de gestion de session UI1 n'a pas les mêmes droits que ledit service de sécurité SES1 et n'a donc pas accès aux actions exécutées par le service de sécurité SES1. Ainsi, cette indépendance évite à un utilisateur d'avoir accès de manière illicite aux paramètres de délégation Dlg et de modifier de façon intempestive le positionnement de ses droits d'accès Rgt, par exemple.

**Dans une troisième étape 3),** dans l'affirmative (lorsque le deuxième utilisateur USR2 a les droits d'accès à la machine cible PC1), ledit service de sécurité SES1 envoie un message de changement d'état MSG au module de gestion de session M1 de ladite machine cible PC1.

Bien entendu, dans la négative (**étape 3'**) (lorsque le deuxième utilisateur USR2 ne possède aucun droit d'accès à la machine cible PC1), ledit service de sécurité SES1 envoie un message d'erreur MSG_NOK pour prévenir l'utilisateur qu'il n'a pas les droits pour verrouiller/déverrouiller la machine cible PC1.

On notera qu'un message de changement d'état MSG est un message applicatif qui est défini en fonction du module de gestion de session M1 de la machine cible PC1 et plus particulièrement en fonction de l'interface utilisateur de gestion de session UI1. Il en est de même d'un message d'erreur MSG_NOK.
Ainsi, par exemple, dans le cas d'une interface utilisateur de gestion de session Windows™, un message de changement d'état est une notification généré par Windows. Dans un autre exemple, dans le cas d'une interface utilisateur de gestion de session Linux™, un message de changement d'état est un événement généré par Linux™.

On notera par ailleurs que dans le cas où le module utilisateur de gestion de session M1 n'est plus actif (comme expliqué ci-dessus selon les systèmes d'exploitation), la réception d'un message applicatif MSG, MSG_NOK le réveille et il redevient actif.

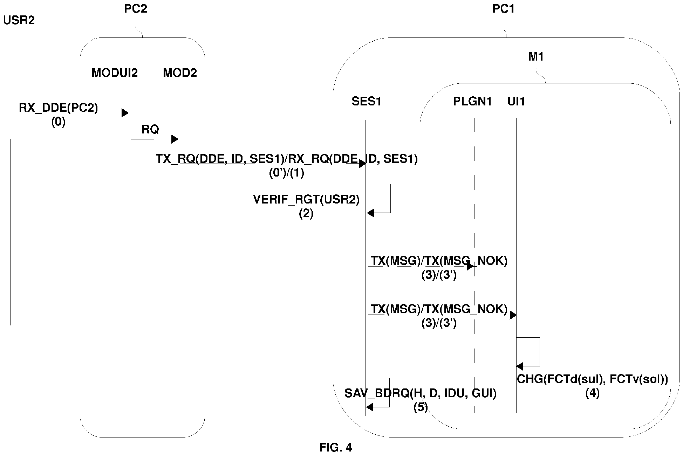

Dans un premier mode de réalisation non limitatif, le message de changement d'état MSG est directement envoyé à l'interface utilisateur de gestion de session UI1 du module de gestion de session M1, tel qu'illustré sur la Fig. 4 par un flèche en trait plein (étape TX(MSG) ou TX(MSG_NOK)). Sur réception de ce message MSG, ladite interface UI1 appelle une fonction de déverrouillage bas niveau FCTd(sul) du système d'exploitation (non représenté) de ladite machine cible PC1.

Dans un deuxième mode de réalisation non limitatif, le message de changement d'état MSG est envoyé à un greffon PLGN1 du module de gestion de session M1, tel qu'illustré sur la Fig. 4 par une flèche sous forme de tirets (étape TX(MSG) ou TX(MSG_NOK)). Le greffon PLGN1, couramment appelé « Plugin » en anglais, sollicite alors l'interface utilisateur de gestion de session UI1 du module de gestion de session M1. Sur cette sollicitation, l'interface UI1 appelle la fonction de déverrouillage bas niveau FCTd(sul) du système d'exploitation (non représenté) de ladite machine cible PC1.
L'utilisation d'un greffon PLGN1 évite de modifier l'interface utilisateur de gestion de session existante dans une machine pour intégrer une fonction de réception du message de changement d'état MSG ou de la remplacer par une nouvelle interface utilisateur de gestion de session intégrant la fonction de réception du message de changement d'état MSG, comme c'est le cas dans le premier mode de réalisation ci-dessus.

Dans un exemple non limitatif, cette fonction de déverrouillage FCTd(sul) se trouve dans une bibliothèque de liens dynamique. Selon les types de systèmes d'exploitation, cette bibliothèque aura une extension différente (par exemple .dll pour « dynamic link library » en anglais ; .so pour « shared object » en anglais ; .dylib pour « dynamic library » en anglais ; .a pour « archive » en anglais ; .sl « pour shared library » en anglais ; .sa pour « archive » en anglais). De telles bibliothèques étant connues de l'homme du métier, elles ne sont pas décrites plus en détail ici.
Dans un autre exemple non limitatif, cette fonction de déverrouillage FCTd(sul) est une fonction binaire. Dans ce cas, contrairement aux bibliothèques de liens dynamiques, elle nécessite une recompilation du module utilisateur de gestion de session M1.

**Dans une quatrième étape 4),** ledit module de gestion de session M1 procède audit changement d'état slo/sul (lorsque l'étape 3 a été effectuée). En particulier, ce changement d'état est effectué par l'interface utilisateur de gestion de session UI1 avec la fonction bas niveau FCTd(sul), comme expliqué ci-dessus.
Ainsi, dans l'exemple pris, après le changement d'état, la machine cible PC1 est déverrouillée (état déverrouillé sul).

Ainsi, le deuxième utilisateur USR2 a pu accéder à la machine cible PC1 sans avoir besoin du « login » (identifiant utilisateur plus mot de passe) du premier utilisateur USR1. Grâce à ses droits d'accès Rgt à la machine cible PC1, il a pu déverrouiller la session utilisateur qui avait été ouverte puis verrouillée par le premier utilisateur USR1. Le deuxième utilisateur USR2 a pu prendre la main sur cette session.
Le deuxième utilisateur URS2 peut par la suite se déplacer à l'emplacement de cette machine cible PC1 et effectuer toute action nécessaire sur ladite machine cible PC1 (via le clavier, la souris ou l'écran de ladite machine cible par exemple), et notamment arrêter une opération boursière dans le cadre de l'application décrite.

On notera que suite à ce déverrouillage et cette intervention sur une opération boursière lancée à partir de la machine cible PC1, le deuxième utilisateur USR2 peut alors retourner à sa place et, s'il n'a pas verrouillé la session sur PC1, verrouiller à partir de sa machine source PC2 cette session utilisateur sur la machine cible PC1 (ouverte par le premier utilisateur USR1) qu'il a déverrouillée. On fait alors appel à une fonction bas niveau de verrouillage FCTv(slo).

**Dans une cinquième étape 5),** on enregistre dans une base de gestion de requêtes BDRQ des informations de traçabilité H, D, IDU, GUI correspondant à ladite requête RQ.

Dans un mode de réalisation non limitatif, l'enregistrement est effectué par le service de sécurité SES1 de la machine cible PC1.

On notera que cette cinquième étape peut s'effectuer à tout moment à partir de l'étape de réception de la requête (soit en parallèle, soit après).

On notera que la base de gestion de requêtes BDRQ est gérée par l'administrateur ADM du système informatique SYS.

Dans des exemples non limitatifs, ces informations de traçabilité peuvent comprendre :
- l'auteur IDU de la requête RQ ;
- des données d'identification GUI de la machine cible (nom, adresse IP, identifiant unique couramment appelé en anglais « Global Unique Identifier »)
- des informations temporelles comprenant :
   - la date D à laquelle la requête a été lancée ; et
   - l'heure H à laquelle la requête a été lancée.
Les informations temporelles, appelées également estampille temporelle, sont couramment appelées en anglais « timestamp ».

Ainsi, ces informations de traçabilité permettent à l'administrateur ADM d'avoir un journal de requêtes RQ lancées sur une machine donnée et notamment de connaître le réel utilisateur qui était responsable de ladite machine à un instant donné et donc qui a lancé telle action sur ladite machine à telle date et à telle heure.

Ainsi, le procédé de changement d'état permet de passer d'un état verrouillé à un état déverrouillé ou vice et versa par une requête distante RQ. Il offre une fonctionnalité de déverrouillage/verrouillage client-serveur à distance, le client étant la machine source PC2 qui invoque le service de sécurité SES1 de la machine cible PC1.
Il permet une prise en main d'une session utilisateur par un utilisateur différent de celui qui a ouvert ladite session.

Le procédé de changement d'état est mis en oeuvre par une machine cible PC1 comportant un service de sécurité SES1 et un module de gestion de session M1.

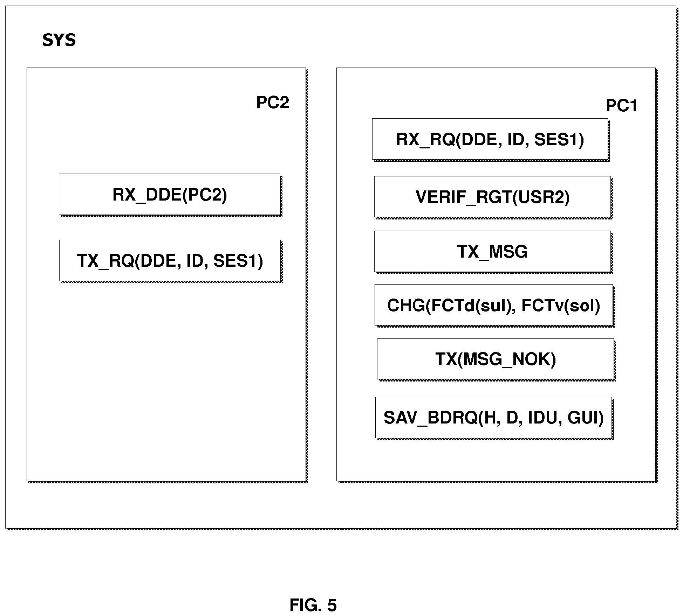

Un système informatique SYS apte à effectuer un changement d'état, verrouillé slo ou déverrouillé sul, d'une machine cible PC1 selon un premier mode de réalisation non limitatif est illustré à la Fig. 3 et à la Fig. 5. Il comporte ladite machine cible PC1 et une machine source PC2 apte à coopérer avec ladite machine cible PC1.

Ladite machine cible PC1 est apte à :
- recevoir par ledit service de sécurité SES1 une requête RQ correspondant à une demande DDE de changement d'état de la machine cible PC1, ladite requête RQ comprenant au moins une information d'identification ID d'un utilisateur USR2 d'une machine source PC2 ;
- à partir dudit service de sécurité SES1, vérifier si des droits d'accès Rgt associés audit utilisateur USR2 de la machine source PC2 autorisent un changement de son état par ledit utilisateur USR2 ;
- dans l'affirmative, à partir dudit service de sécurité SES1, envoyer un message de changement d'état MSG au module de gestion de session M1 et procéder audit changement d'état slo/sul par ledit module de gestion de session M1.

Dans un mode de réalisation non limitatif, le module de gestion de session M1 (appelé également module de gestion de session cible) comprend :
- un greffon PLGN1 (appelé également greffon cible) apte à recevoir un message de changement d'état MSG dudit service de sécurité SES1 ; et
- une interface utilisateur de gestion de session UI1 apte à être sollicitée par ledit greffon pour changer d'état ladite machine cible PC1.

Ladite machine source PC2 est apte à coopérer avec ladite machine cible PC1 comportant un service de sécurité SES1, ladite machine source PC2 étant apte à :
- recevoir une demande DDE de changement d'état de la machine cible PC1 d'un utilisateur USR2 de la machine source PC2 ; et
- envoyer une requête RQ correspondant à ladite demande DDE au service de sécurité SES1 de ladite machine cible PC1, ladite requête RQ comprenant au moins une information d'identification ID d'un utilisateur USR2 de ladite machine source PC2.

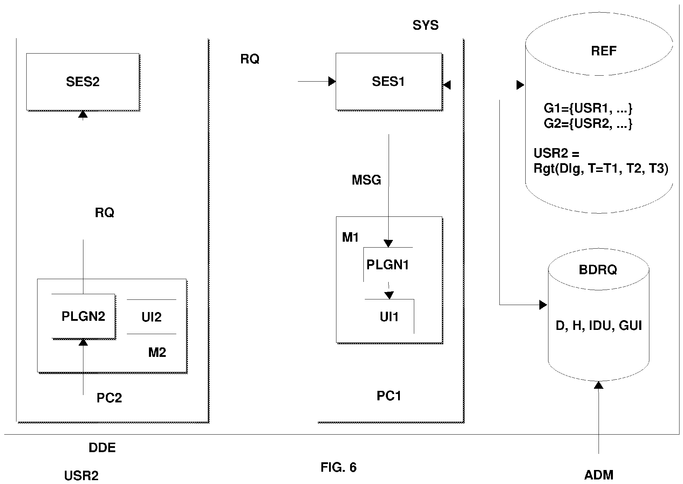

Bien entendu la description n'est pas limitée à l'application, aux modes de réalisation et aux exemples décrits ci-dessus.
- Ainsi, les mêmes explications décrites ci-dessus pour l'exemple non limitatif d'une machine cible PC1 se trouvant dans un état verrouillé slo précédemment par le premier utilisateur USR1 s'appliquent dans le cas d'une machine cible PC1 se trouvant dans un état déverrouillé sul précédemment par le premier utilisateur USR1. On fera appel dans ce cas à une fonction bas niveau de verrouillage FCTv(sol) pour verrouiller ladite machine cible PC1.
- Ainsi, dans un mode de réalisation non limitatif, les délégations peuvent être activées par l'administrateur ADM au lieu d'un utilisateur d'un groupe autorisé.
- Ainsi, dans un premier mode de réalisation non limitatif, la machine source PC2 comprend également un service de sécurité SES2, appelé service de sécurité source, (au lieu d'un programme dédié tel que le module de déverrouillage/verrouillage MOD2) qui est apte à :
   - recevoir une demande DDE de changement d'état de la machine cible PC1 du deuxième utilisateur USR2 ;
   - envoyer une requête RQ correspondant à ladite demande DDE audit service de sécurité SES1 de la machine cible PC1, ladite requête RQ comprenant au moins une information d'identification ID du deuxième utilisateur USR2 de la machine source PC2.
Cela évite de modifier l'interface utilisateur de gestion de session UI2 de la machine source PC2 pour intégrer ces deux fonctions (réception de la demande DDE et envoi d'une requête RQ correspondante).
- Ainsi, dans deuxième mode de réalisation non limitatif, un greffon PLGN2 (appelé greffon source) est associé à l'interface utilisateur de gestion de session UI2 de la machine source PC2 (au lieu d'un programme dédié tel que le module de déverrouillage/verrouillage MOD2), ledit greffon PLGN2 étant apte à recevoir :
   - une demande DDE de changement d'état de la machine cible PC1 du deuxième utilisateur USR2 ;
   - envoyer une requête RQ correspondant à ladite demande DDE audit service de sécurité SES1 de la machine cible PC1, ladite requête RQ comprenant au moins une information d'identification ID du deuxième utilisateur USR2 de la machine source PC2.
Cela évite de modifier l'interface utilisateur de gestion de session UI2 de la machine source PC2 pour intégrer ces deux fonctions (réception de la demande DDE et envoi d'une requête RQ correspondante).
Bien entendu, les deux modes de réalisation (service de sécurité SES2 et PLGN2) peuvent être combinés entre eux tel qu'illustré sur la Fig. 6.
Dans ce cas, le greffon source PLGN2 est apte à effectuer la première fonction de réception d'une demande DDE, tandis que le service de sécurité source SES2 est apte à effectuer la deuxième fonction d'envoi d'une requête RQ correspondante. Le greffon source PLGN2 et le service de sécurité source SES2 forment un module utilisateur de gestion de session source M2.
- Ainsi, dans un mode de réalisation non limitatif, l'envoi d'une requête RQ peut s'effectuer par un protocole de communication autre que TCP/IP ou UDP. Tout protocole de communication qui permet un échange de données sur un réseau informatique entre plusieurs machines peut être utilisé.
- Ainsi, dans un mode de réalisation non limitatif, lors de l'activation des droits d'accès Rgt par le premier utilisateur URS1 autorisant le deuxième utilisateur USR2 à accéder à la machine cible PC1, on peut envoyer un message applicatif d'acceptation à la machine source PC2 pour que le deuxième utilisateur USR2 accepte ladite délégation. Ce message est par exemple une boîte de dialogue couramment appelée « pop-up » en anglais.

- Ainsi, dans un mode de réalisation non limitatif, on peut restreindre l'autorisation de délégation associée au deuxième utilisateur USR2 à un sous-ensemble de machines du premier utilisateur URS1.
- Ainsi, le procédé décrit peut être utilisé dans des applications autres que celle décrite du domaine bancaire. Par exemple il peut s'appliquer dans le cadre d'une supervision :
   - d'une centrale nucléaire,
   - d'un réseau téléphonique,
   - d'un réseau ferroviaire,
   - dans une tour de contrôle,
   - dans un parc d'ascenseurs etc....
et de manière générale dans toute application nécessitant une supervision particulière sur un écran d'une machine cible qui peut nécessiter une intervention rapide de la part d'un opérateur sur une machine cible qui n'est pas la machine qu'il utilise.

Ainsi, l'invention décrite présente notamment les avantages suivants :
- elle est simple à mettre en oeuvre ;
- elle permet de changer à distance l'état d'une machine par un utilisateur qui n'est pas l'utilisateur de ladite machine ;
- elle est sécurisée du fait du service de sécurité cible SES1 qui se trouve à l'extérieur du module utilisateur de gestion de session cible M1 et qui est donc indépendant de ce dernier ;
- elle permet d'accéder à une machine cible en prenant la main sur la session utilisateur déjà existante sur ladite machine cible et par une personne qui n'est pas utilisateur de la machine cible et donc qui est différent de l'utilisateur qui a verrouillé/déverrouillé la session utilisateur précédemment. Ainsi, une même session utilisateur peut être ouverte et verrouillée par un utilisateur, mais déverrouillée par une personne différente (ou vice et versa déverrouillée par un utilisateur, mais verrouillée par une personne non utilisateur différente) ;
- elle permet de faire un audit des requêtes et notamment en ce qui concerne des actions lancées sur une machine grâce au journal des requêtes, et ainsi d'identifier le véritable auteur des actions effectuées sur une machine ;
- elle permet d'avoir deux niveaux d'accès (un premier niveau administrateur avec le positionnement des délégations, un deuxième niveau utilisateur avec l'activation desdites délégations) pour définir les droits d'accès à une machine cible associés à une personne qui n'est pas l'utilisateur de ladite machine cible. Ainsi, cela permet d'avoir un double contrôle desdits droits d'accès et donc un niveau de contrôle élevé ;
- elle permet d'avoir des droits d'accès paramétrables grâce aux paramètres d'exécution et ainsi de particulariser certains de ces droits d'accès si nécessaire ;
- elle évite de donner un login à un utilisateur non propriétaire dudit login pour déverrouiller/verrouiller la machine du propriétaire du login, ce qui permet de garder la confidentialité dudit login ; et
- elle permet de déverrouiller une session utilisateur sur une machine cible en gardant l'identité de l'utilisateur (le premier utilisateur USR1 dans l'exemple pris) à l'origine de la session (c'est-à-dire qui l'a ouverte) sans utiliser non plus le login d'une autre personne non utilisateur de ladite machine cible (le deuxième utilisateur URS2 dans l'exemple pris).

## Revendications

1. Procédé de changement d'état, verrouillé (slo) ou déverrouillé (sul), d'une machine cible (PC1) comportant un service de sécurité (SES1), un module de gestion de session (M1) et mettant un oeuvre une session pour un premier utilisateur (USR1), le procédé comportant les étapes de :
- recevoir par ledit service de sécurité (SES1) une requête (RQ) correspondant à une demande (DDE) de changement d'état de la machine cible (PC1), ladite requête (RQ) comprenant au moins une information d'identification (ID) d'un deuxième utilisateur (USR2) d'une machine source (PC2) ;
- à partir dudit service de sécurité (SES1), vérifier si des droits d'accès (Rgt) à ladite machine cible (PC1) associés audit deuxième utilisateur (USR2) de la machine source (PC2) autorisent un changement d'état de la machine cible (PC1) par ledit deuxième utilisateur (USR2) ;
- dans l'affirmative, à partir dudit service de sécurité (SES1), envoyer un message de changement d'état (MSG) au module de gestion de session (M1) de ladite machine cible (PC1) et procéder audit changement d'état (slo/sul) c'est à dire, le verrouillage ou déverrouillage de ladite machine cible, par ledit module de gestion de session (M1).

2. Procédé de changement d'état selon la revendication précédente, selon lequel il comporte une étape supplémentaire d'enregistrement, dans une base de gestion de requêtes (BDRQ), d'informations de traçabilité (H, D, IDU, GUI) correspondant à ladite requête (RQ).

3. Procédé de changement d'état selon l'une quelconque des revendications précédentes, selon lequel les droits d'accès (Rgt) dépendent de paramètres de délégation (Dlg) d'un groupe d'utilisateurs (G1) à un autre groupe d'utilisateurs (G2).

4. Procédé de changement d'état selon la revendication précédente, selon lequel les paramètres de délégation (Dlg) sont activables par un utilisateur (U1) d'un groupe d'utilisateurs (G1).

5. Procédé de changement d'état selon l'une quelconque des revendications précédentes, selon lequel des paramètres d'exécution (T) sont associés aux droits d'accès (Rgt).

6. Procédé de changement d'état selon l'une quelconque des revendications précédentes, selon lequel la requête (RQ) de changement d'état est une requête TCP/IP ou UDP.

7. Procédé de changement d'état selon l'une quelconque des revendications précédentes, selon lequel un message de changement d'état (MSG) est un message applicatif défini en fonction du module de gestion de session (M1) de la machine cible (PC1).

8. Procédé de changement d'état selon l'une quelconque des revendications précédentes, selon lequel le message de changement d'état (MSG) est envoyé à un greffon (PLGN1) du module de gestion de session (M1).

9. Machine cible (PC1) comportant un service de sécurité (SES1) et un module de gestion de session (M1), ladite machine cible (PC1) étant apte à exécuter le procédé défini par la revendication 1.

10. Machine cible(PC1) selon la revendication précédente, selon laquelle le module de gestion de session (M1) comprend :
- un greffon (PLGN1) apte à recevoir un message de changement d'état (MSG) dudit service de sécurité (SES1) ; et
- une interface utilisateur de gestion de session (UI1) apte à être sollicitée par ledit greffon (PLGN1) pour changer d'état ladite machine cible (PC1).

11. Machine source (PC2) apte à coopérer avec une machine cible (PC1) selon la revendication 9 ou la revendication 10, ladite machine cible comportant un service de sécurité (SES1), ladite machine source (PC2) étant apte à :
- recevoir une demande (DDE) de changement d'état de la machine cible (PC1) d'un utilisateur (USR2) de la machine source (PC2) ; et
- envoyer une requête (RQ) correspondant à ladite demande (DDE) au service de sécurité (SES1) de ladite machine cible (PC1), ladite requête (RQ) comprenant au moins une information d'identification (ID) d'un utilisateur (USR2) de ladite machine source (PC2).

12. Système informatique (SYS) apte à effectuer un changement d'état, verrouillé (slo) ou déverrouillé (sul), d'une machine cible (PC1), ledit système informatique (SYS) comprenant une machine cible (PC1) selon l'une quelconque des revendications 9 ou 10, et une machine source (PC2) selon la revendication 11 apte à coopérer avec ladite machine cible (PC1).

## Patentansprüche

1. Änderungsverfahren eines verriegelten (slo) oder entriegelten (sul) Zustandes einer Zielmaschine (PC1), umfassend einen Sicherheitsdienst (SES1), ein Session-Verwaltungsmodul (M1) und eine Session für einen ersten Nutzer (USR1) umsetzend, wobei das Verfahren die Schritte umfasst:
- von dem genannten Sicherheitsdienst (SES1) eine Anfrage (RQ) erhalten, die einer Änderungsanforderung (DDE) des Zustandes der Zielmaschine (PC1) entspricht, wobei die genannte Anfrage (RQ) wenigstens eine Identifizierungsinformation (ID) eines zweiten Nutzers (USR2) einer Quellmaschine (PC2) entspricht;
- ausgehend von dem genannten Sicherheitsdienst (SES1) überprüfen, ob Zugangsrechte (Rgt) zu der genannten Zielmaschine (PC1), die dem genannten zweiten Nutzer (USR2) der Quellmaschine (PC2) zugeordnet sind, eine Zustandsänderung der Zielmaschine (PC1) durch den genannten zweiten Nutzer (USR2) zulassen;
- falls ja, ausgehend von dem genannten Sicherheitsdienst (SES1) eine Änderungsmeldung des Zustandes (MSG) an das Session-Verwaltungsmodul (M1) der genannten Zielmaschine (PC1) senden und den genannten Änderungszustand (slo/sul) vornehmen, d. h. die Verriegelung oder Entriegelung der genannten Zielmaschine durch das genannte Session-Verwaltungsmodul (M1).

2. Änderungsverfahren des Zustandes gemäß dem voranstehenden Anspruch, gemäß dem es einen zusätzlichen Registrierungsschritt in einer Anfrageverwaltungs-Datenbank (BDRQ) von Rückverfolgungsinformationen (H, D, IDU, GUI) umfasst, die der genannten Sitzung (RQ) entsprechen.

3. Änderungsverfahren des Zustandes gemäß irgendeinem der voranstehenden Ansprüche, gemäß dem die Zugangsrechte (Rgt) von Delegierungsparametern (Dlg) einer Nutzergruppe (G1) auf eine andere Nutzergruppe (G2) abhängen.

4. Änderungsverfahren des Zustandes gemäß dem voranstehenden Anspruch, gemäß dem die Delegierungsparameter (Dlg) durch einen Nutzer (U1) einer Nutzergruppe (G1) aktivierbar sind.

5. Änderungsverfahren eines Zustandes gemäß irgendeinem der voranstehenden Ansprüche, gemäß dem den Zugangsrechten (Rgt) Ausführungsparameter (T) zugeordnet sind.

6. Änderungsverfahren des Zustandes gemäß irgendeinem der voranstehenden Ansprüche, gemäß dem die Änderungsanfrage (RQ) des Zustandes eine Anfrage TCP/IP oder UDP ist.

7. Änderungsverfahren des Zustandes gemäß irgendeinem der voranstehenden Ansprüche, gemäß dem eine Zustandsänderungs-Meldung (MSG) eine applikative Meldung ist, die in Abhängigkeit von dem Session-Verwaltungsmodul (M1) der Zielmaschine (PC1) definiert ist.

8. Änderungsverfahren des Zustandes gemäß irgendeinem der voranstehenden Ansprüche, gemäß dem die Änderungsmeldung des Zustandes (MSG) an ein Plugin (PLGN1) des Session-Verwaltungmoduls (M1) gesendet wird.

9. Zielmaschine (PC1), umfassend einen Sicherheitsdienst (SES1) und ein Session-Verwaltungsmodul (M1), wobei die genannte Zielmaschine (PC1) fähig ist, das von Anspruch 1 definierte Verfahren auszuführen.

10. Zielmaschine (PC1) gemäß dem voranstehenden Anspruch, gemäß der das Session-Verwaltungsmodus (M1) umfasst:
- ein Plugin (PLGN1), das zum Empfang einer Änderungsmeldung des Zustandes (MSG) des genannten Sicherheitsdienstes (SES1) fähig ist; und
- eine Nutzerschnittstelle zur Sessionverwaltung (UI1), die geeignet ist, durch das genannte Plugin (PLGN1) zum Ändern des Zustandes der genannten Zielmaschine (PC1) angesprochen zu werden.

11. Quellmaschine (PC2), die geeignet ist, mit einer Zielmaschine (PC1) gemäß Anspruch 9 oder Anspruch 10 zusammenzuwirken, wobei die genannte Zielmaschine einen Sicherheitsdienst (SES1) umfasst, wobei die genannte Quellmaschine (PC2) geeignet ist, um:
- eine Änderungsanforderung (DDE) des Zustandes der Zielmaschine (PC1) eines Nutzers (USR2) der Quellmaschine (PC2) zu empfangen; und
- eine Anfrage (RQ) an den Sicherheitsdienst (SES1) der genannten Zielmaschine (PC1) zu versenden, die der genannten Anforderung (DDE) entspricht, wobei die genannte Anforderung (RQ) wenigstens eine Identifizierungsinformation (ID) eines Nutzers (USR2) der genannten Quellmaschine (PC2) umfasst.

12. Informatiksystem (SYS), das geeignet ist, eine verriegelte (slo) oder entriegelte (sul) Änderung des Zustandes einer Zielmaschine (PC1) auszuführen, wobei das genannte Informatiksystem (SYS) eine Zielmaschine (PC1) gemäß irgendeinem der Ansprüche 9 oder 10 umfasst, und eine Quellmaschine (PC2) gemäß Anspruch 11, die geeignet ist, um der genannten Zielmaschine (PC1) zusammenzuwirken.

## Claims

1. A method to change the status, locked (slo) or unlocked (sul), of a target machine (PC1) comprising a security service (SES1), a session management module (M1), and implementing a session for a first user (USR1), the method comprising the steps of:
- receiving, by said security service (SES1) a query (RQ) corresponding to a request (DDE) to change the status of the target machine (PC1), said query (RQ) comprising at least one piece of identification information (ID) from a second user (USR2) of a source machine (PC2);
- from said security service (SES1), verifying if access rights (Rgt) to said target machine (PC1) associated with said second user (USR2) of the source machine (PC2) allow a change in the status of the target machine (PC1) by said second user (USR2) ;
- if so, sending, from said security service (SES1), a status change message (MSG) to the session management module (M1) of said target machine (PC1) and proceeding to said status change (slo/sul) by said session management module (M1).

2. The status change method according to the previous claim, according to which it comprises an additional step of recording, in a query management base (BDRQ), traceability information (H, D, IDU, GUI) corresponding to said query (RQ).

3. The status change method according to any one of the previous claims, according to which the access rights (Rgt) depend on the delegation parameters (Dlg) from one group of users (G1) to another group of users (G2) .

4. The status change method according to the previous claim, according to which the delegation parameters (Dlg) can be activated by a user (U1) from a group of users (G1).

5. The status change method according to any one of the previous claims, according to which the execution parameters (T) are associated with the access rights (Rgt) .

6. The status change method according to any one of the previous claims, according to which the query (RQ) to change the status is a TCP/IP or UDP query.

7. The status change method according to any one of the previous claims, according to which a status change message (MSG) is an application-oriented message defined according to the session management module (M1) of the target machine (PC1).

8. The status change method according to any one of the previous claims, according to which the status change message (MSG) is sent to a plugin (PLGN1) of the session management module (M1).

9. A target machine (PC1) comprising a security service (SES1) and a session management module (M1), said target machine (PC1) being capable of implementing the method according to claim 1.

10. The target machine (PCT) according to the previous claim, according to which the session management module (M1) comprises:
- a plugin (PLGN1) capable of receiving a status change message (MSG) from said security service (SES1); and
- a session management user interface (UI1) capable of being solicited by said plugin (PLGN1) to change the status of said target machine (PC1).

11. A source machine (PC2) capable of cooperating with a target machine (PC1) according to claim 9 or to claim 10, said target machine comprising a security service (SES1), said source machine (PC2) being capable of:
- receiving a request (DDE) to change the status of the target machine (PC1) by a user (USR2) of the source machine (PC2); and
- sending a query (RQ) corresponding to said request (DDE) to the security service (SES1) of said target machine (PC1),
said query (RQ) comprising at least one piece of identification information (ID) from a user (USR2) of said source machine (PC2).

12. A computer system (SYS) capable of performing a change of status, locked (slo) or unlocked (sul), of a target machine (PC1), said computer system (SYS) comprising a target machine (PC1) according to any one of claims 9 or 10, and a source machine (PC2) according to claim 11 capable of cooperating with said target machine (PC1).
